# EUROPEAN PATENT APPLICATION

(11) **EP 3 923 154 A1**
(43) Date of publication of application: **15.12.2021**
(21) Application number: 20315303.6
(22) Date of filing: 11.06.2020
(51) Int. Cl.: G06F 16/00

(54) **IDENTIFYING AND GENERATING LINKS BETWEEN DATA**

(71) Applicant: IVALUA SAS, 91300 Massy (FR)
(72) Inventor: Coquard, Aurélien, 91400 Orsay (FR); Bourez, Christopher, 91400 Orsay (FR)
(74) Representative: EIP

(57) **Abstract**

There is provided a computer implemented method and a computer system for implementing the same. According to the method, a processor configured to execute a neural network provides an identifier associated with a first entity to the neural network, wherein the neural network comprises a plurality of nodes each containing a learned parameter, each learned parameter being derived in a training phase of the neural network in which at least one vector representing a word is input to the neural network. The processor also provides, to the neural network, at least one data record retrieved from a database and associated with a second entity, the at least one data record comprising data stored therein. The neural network applies the learned parameters of at least a subset of the plurality of nodes to data representative of the identifier and the data stored in the at least one data record. The neural network uses the respective learned parameters to identify whether the at least one data record contains data that satisfies a similarity threshold with respect to the data representative of the identifier. Responsive to identifying that the at least one data record contains data that satisfies the similarity threshold, the neural network generates a link between the first entity and the second entity. Otherwise, a result is outputted that is representative of identifying that the at least one data record contains data that does not satisfy the similarity threshold with respect to the data representative of the identifier.

## Description

### BACKGROUND OF THE INVENTION

### Field of the Invention

The present application relates to linking data, and, more specifically, methods and systems for identifying similarities between data using a neural network and generating links therebetween.

### Description of the Related Technology

As technologies advance, more and more information is being generated by a variety of sources. A large quantity, if not the majority, of this information is stored in electronic form, often in databases.

This information often contains inconsistencies, which causes duplication of information that relates to the same source. In addition, the sheer volume of information that is being stored, together with limitations on the processing and storage resources of a database system, presents an issue as to how data is organized and stored.

Typical database systems contain data records in which data is organized and stored according to predefined attributes.

It would be advantageous to more efficiently use the processing and storage resources of a database system, for example, by rationalizing what are in fact duplicate records.

### SUMMARY

According to a first aspect of the invention there is provided a computer-implemented method comprising: providing, by a processor configured to execute a neural network, a identifier associated with a first entity to the neural network, wherein the neural network comprises a plurality of nodes each containing a learned parameter, each learned parameter being derived in a training phase of the neural network in which at least one vector representing a word is input to the neural network; providing, by the processor and to the neural network, at least one data record retrieved from a database and associated with a second entity, the at least one data record comprising data stored therein; applying, by the neural network, the learned parameters of at least a subset of the plurality of nodes to data representative of the identifier and the data stored in the at least one data record; using, by the neural network, the respective learned parameters to identify whether the at least one data record contains data that satisfies a similarity threshold with respect to the data representative of the identifier; responsive to identifying that the at least one data record contains data that satisfies the similarity threshold, generating, by the neural network, a link between the first entity and the second entity; otherwise, outputting a result representative of identifying that the at least one data record contains data that does not satisfy the similarity threshold with respect to the data representative of the identifier.

The use of a question-answering neural network approach to a data linking problem, which arises from inconsistencies within data obtained from different sources, enables a link to be established between entities and thereby provides a comprehensive and resource-efficient solution that can be used to reduce duplication within a database. In addition, more comprehensive entity linking results are provided, including a result when none of the data records obtained from a data source match an entity associated with data obtained from a different data source.

The learned parameters of the plurality of nodes can be arranged to identify textual and semantic similarities between the data representative of the identifier and the data stored in the at least one data record.

In some embodiments, the aforementioned method further comprises a plurality of data records, each being associated with a respective entity, and the method further comprises: using, by the neural network, the respective learned parameters to identify whether each of the plurality of data records contains data that satisfies a similarity threshold with respect to the data representative of the identifier. The plurality of data records can be a set of candidate search results retrieved from the database using a search engine and assessed to be most relevant to the data representative of the identifier. The neural network addresses insufficiently relevant search results and advantageously refines the search results by identifying the most relevant data records.

Preferably, for each of the plurality of data records that contains data that satisfies the similarity threshold, a link is generated between the first entity and the respective entity of the corresponding data record.

Optionally, a result may be output, which is indicative of the one or more links between the first entity and the respective entities of the corresponding data records. The generation of a link between similar data enables more efficient use of computer resources, for example, combining the similar data into a single data record. The outputting of a result indicating the link uses the question-answer framework on which the neural network is based.

In some embodiments, for each of the plurality of data records that does not contain data that satisfies the similarity threshold, a result can be output that is representative of identifying that the respective data record contains data that does not satisfy the similarity threshold with respect to the data representative of the identifier. Outputting a result per data record enables more sophisticated management of computer resources by prompting an action based on the result, for example, the result may notify a user to check the similarity between the identifier and the data record in question or may notify to a user that a new data record is to be generated.

The identifier may be associated with a document comprising data and responsive to a link being generated between the first entity and a respective entity associated with a data record, extracting the data from the document associated with the identifier and storing the data extracted from the document into the at least one data record associated with the respective entity. Extracting data from a data source, such as the document, based on a generated link avoids duplication within the database by storing data of the document into the already-established data record in the database. In addition, the amount of data being stored that is related to the given entity is increased, which will improve search results in response to future queries related to said entity because there is more data within the data record to compare to a search query.

The identifier may be associated with another data record retrieved from the database and responsive to a link being generated between the first entity and a respective entity associated with a different data record, in which case the method can further comprise: extracting the data from the another data record; storing said data into the different data record associated with the respective entity; and deleting the another data record from the database. In this way, the neural network enables active de-duplication of a database whilst retaining enough data relating to a given entity.

The identifier may be associated with a document comprising data, in which case, responsive to identifying that the at least one data record contains data that does not satisfy a similarity threshold with respect to the data representative of the identifier, the data can be extracted from the document associated with the identifier and generating a further data record containing the data extracted from the document, the further data record being stored into the database. Advantageously, the generation of a further data record to store data relating to a new or unknown entity enables said data to be captured so that so that any identifiers relating to said entity and provided to the neural network in the future will be linked to the entity and the data record may be updated.

Optionally, the at least one data record is a result of a search query executed by a search engine with respect to the database. A search engine generates search results, even though they may not be that relevant to the search query; accordingly, the neural network refines those search results based on their similarity to a received identifier, which may have been submitted as part of the search query.

According to a second aspect of the invention, there is provided a computer system comprising a server, the server having a processor configured to implement the aforementioned method.

According to a third aspect of the invention, there is provided a computer-readable medium comprising instructions that, when executed by at least one processor, cause the at least one processor to carry out the aforementioned method.

The application of a question-answering neural network approach to a data linking problem that arises from inconsistencies within data obtained from different sources enables a link to be established between entities and thereby provides a comprehensive and resource-efficient solution that can be used to reduce duplication within a database. In addition, more comprehensive entity linking results are provided, including a result when none of the data records obtained from a data source match an entity associated with data obtained from a different data source.

### BRIEF DESCRIPTION OF THE DRAWINGS

Various features of the present disclosure will be apparent from the detailed description which follows, taken in conjunction with the accompanying drawings, which together illustrate, features of the present disclosure, and wherein:
Figure 1 is a schematic diagram of a computer system, according to an example.
Figure 2 is a schematic diagram of a processing engine, according to an example.
Figure 3 is a simplified schematic diagram of a neural network, according to an example.
Figure 4 is a simplified schematic diagram of the layers of the neural network of Figure 3.
Figure 5 is a flowchart of a method of identifying and generating a link between data, according to an example.
Figure 6 is a schematic diagram of a computer system, according to an example.
Figure 7 is a schematic representative of an implementation of the neural network of Figure 3, according to an example.
Figure 8 is a further schematic representative of an implementation of the neural network of Figure 3, according to an example.
Figure 9 is a further schematic representative of an implementation of the neural network of Figure 3, according to an example.

### DETAILED DESCRIPTION OF CERTAIN EMBODIMENTS

Typical search processing involves steps including receipt of a query, search of a large amount of data to identify information related to the query, and provision of a response to the query, often in the form of a list of the identified information in order of relevance (also referred to as "search results"). This is understood to be the general, underlying principle of online search engines (for example, Google^{®} search) and other search processes, such as lookup operations. Some search engine providers have sought to improve the search functionality of their search engines by using neural networks to process complicated search queries and provide improved search results (that is, search results that are more relevant to the initial query while minimizing search results of less relevance).

For example, a question-answering approach can be used to process a search query, whereby the most relevant sources of data, that is, the data sources that are more likely to contain the answer to a search query, are identified. Next, the identified data sources are split into sections and the most relevant sections are determined. Last, an answer is extracted from those relevant sections using a neural network trained to recognise textual and semantic information within a section of text that is relevant to the search query.

The present inventors have identified that combining the aforementioned general search process with a question-answering neural network approach and applying it to a data linking problem that arises from inconsistencies within data obtained from different sources, provides a comprehensive and resource-efficient solution that can be used to reduce duplication within a database. For example, determining a link between data obtained from a database and another data source and, as a result, actioning an update to the database (also referred to as "entity linking" when the respective data is associated with an "entity").

An "entity" is understood to be a party, for example, an individual person, a company (for example, a supplier, manufacturer, distributor), and any sort of organization or institution. Data relating to an entity and obtained from different sources, for example, different data records of a database, may be distinct, leading to a conclusion with conventional data linking methods that the different data corresponds to distinct entities, which can result in inefficient recording of such data in a database, for example, the duplication of data records. The solution described herein enables a determination that distinct data can relate to the same entity or that there is a link between the entities associated with the distinct data. An entity may be linked to another on the basis of having one or more attributes that are the same or satisfy a degree of similarity, which can vary from being broadly defined, for example, a field of industry, or more narrowly defined such as, a street address, and a company name or ID. In one example, a link may be established between entities that are the same, for example, where the entities are the same supplier company.

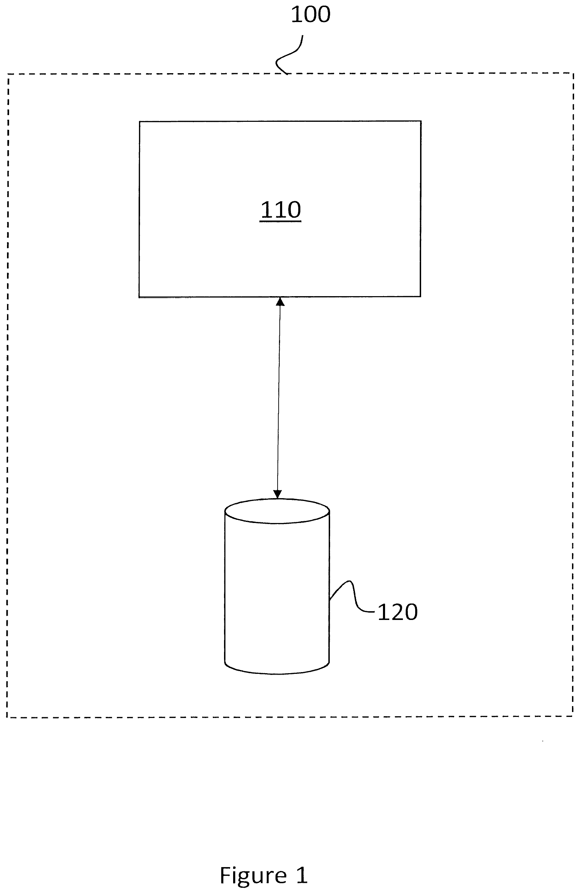

Figure 1 shows a computing system 100 to which embodiments described herein have particular applications.

The computing system 100 comprises a server system 110 and a storage system 120. The server system 110 is communicatively coupled to the storage system 120.

The server system 110 is configured to execute a neural network that identifies and generates links between data inputs. The server system 110 may comprise a plurality of servers, possibly at different physical locations, that collectively execute the neural network. In one example, the neural network is a recurrent neural network (RNN). In the examples described herein, data input to the neural network is associated with an entity such as a company.

The storage system 120 stores a plurality of data records each storing data associated with one or more entities. The storage system 120 may comprise a plurality of databases that collectively store the plurality of data records. In some examples, there may be a one-to-many relationship between an entity and data records in the storage system 120. That is, there may be multiple data records associated with the same entity. In other examples, there may be a one-to-one relationship. That is, there may be a single data record relating to an entity.

The server system 110 is used to implement training and inference phases of the neural network. For both phases, the server system 110 receives data from the storage system 120.

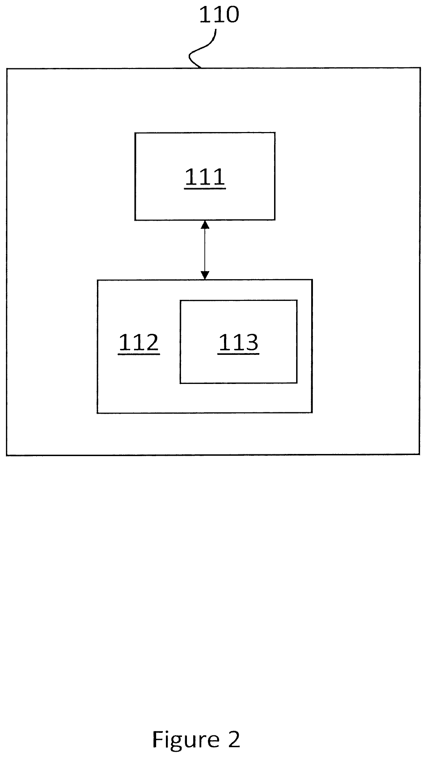

Figure 2 shows the server system 110 to which embodiments described herein have particular applications. The server system 110 comprises at least one processor 111 and at least one computer readable medium 112. The computer readable medium comprises instructions 113 that are executed by the processor 111 to execute the neural network in the training and inference phases.

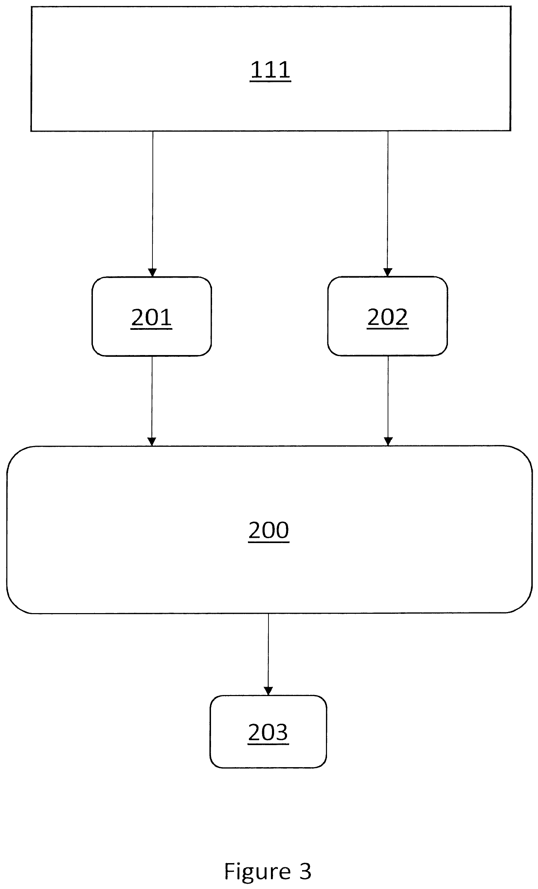

Figure 3 shows a simplistic representation of the neural network trained and executed by the computing system 100 of Figure 1, according to an example. Upon execution of computer instructions, the processor 111 of the server system 110 provides a first input 201 and a second input 202 to the neural network 200. The first input 201 comprises an identifier associated with a first entity. The second input 202 comprises at least one data record retrieved from the database 120 and containing data relating to a second entity.

In one example, the second input 202 comprises a plurality of data records, each being associated with a respective entity and containing data relating to that entity. The identifier of the first input 201 may be extracted from a document comprising data relating to the first entity, such as an invoice, where the document has been received in electronic form by the processor 111. For example, the identifier is one of a supplier name, code, or ID number.

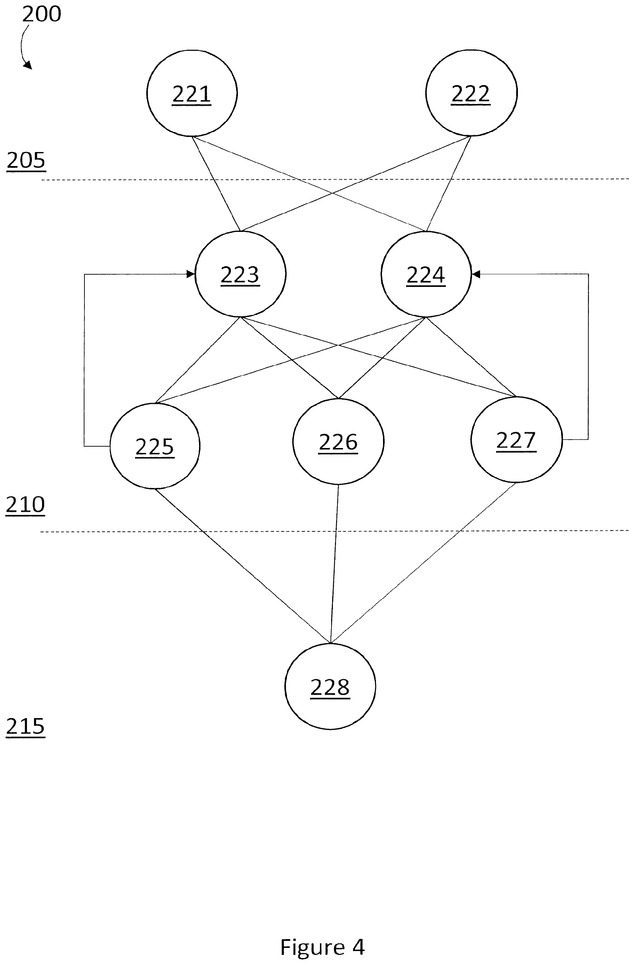

The neural network 200 comprises a plurality of nodes (Figure 4) each containing a learned parameter derived in a training phase of the neural network 200 in which at least one vector representing a word (also referred to herein as a "word embedding") is input to the neural network 200. As a result of the training, the neural network 200 is trained to use the learned parameters to identify textual and semantic similarities between the first and second inputs 201, 202, or derivatives thereof.

The neural network 200 applies the learned parameters of at least a subset of the plurality of nodes to the first input 201 and the second input 202.

The respective learned parameters are used by the neural network 200 to identify whether the at least one data record (second input 202) contains data that satisfies a similarity threshold with respect to the data representative of the identifier (first input 201).

Responsive to identifying that the at least one data record contains data that satisfies the similarity threshold, the neural network generates a link between the first entity and the second entity and generates an output 203 that is representative of the link. Otherwise, the output 203 is a result representative of identifying that the at least one data record contains data that does not satisfy the similarity threshold with respect to the data representative of the identifier.

The result in the output 203 may indicate that the at least one data record should be dismissed because the second entity is not sufficiently similar to the first entity. In this case, the result may be a "no record" answer. In some cases, a "please check", or similar, answer may be contained in the output 203 to initiate an action. For instance, a "please check" answer may be generated when it is determined that the degree of similarity between the different data is within a predetermined range from the similarity threshold or when it is determined that the at least one data record is a duplicate of another data record also provided to the neural network 200 for processing with respect to the identifier.

As described above, the output 203 is based on a degree of identified similarities between the input data. The output 203 is used to trigger an action with respect to a database of the storage system 120. In this way, the neural network 200 is able to derive meaning from input data and determine, based on the meaning: (i) whether the input data relates to a common entity or whether there is a link between the respective entities; and (ii) what, if any, action is to be taken with respect to the database based on (i).

In cases where the identifier is associated with a document, responsive to a link being generated between the first entity and the second entity, data is extracted from the document and stored into the at least one data record associated with the second entity. In this way, the at least one data record is modified to contain additional data relating to the identified "linked" entity so that duplication within the database is avoided because modification of the at least one data record takes place instead of generating a new data record and storing it into the database. In addition, the modification of the at least one data record to contain further data relating to the linked entity will improve search results in response to future queries because there is more data within the data record to evaluate with respect to a search query and an identifier associated with another entity.

Otherwise, responsive to identifying that the at least one data record contains data that does not satisfy a similarity threshold with respect to the data representative of the identifier, data is extracted from the document associated with the identifier and a further data record is generated that contains the data extracted from the document, the further data record being stored into the database. In this way, the database is updated to store data relating to a new or previously unseen entity, which will improve search results in response to future queries relating to the new entity.

Alternatively, the identifier may be associated with another, different data record retrieved from the database. Responsive to a link being generated between the first entity and the respective entity associated with the at least one data record, data is extracted from one of the data records and stored into the different record, and the data record from which the data is extracted is deleted from the database. Where both data records are originally stored in the same database, the deletion is a way of carrying out deduplication within the database by merging data records that relate to a common entity and thereby reducing the amount of data in the storage system 120.

Figure 4 shows a simplified schematic drawing of the neural network 200 of Figure 3, according to an example.

The neural network 200 is a recurrent neural network that comprises a plurality of layers: an input layer 205; hidden layers 210; and an output layer 215.

The neural network 200 has a plurality of nodes 221-228 arranged amongst the layers. Node 221 and node 222 are in the input layer 205. Nodes 223-227 are in the hidden layers 210. Node 228 is in the output layer 215. Each node is connected to one or more other nodes, for example to those within neighboring layers, via a plurality of connections (represented by lines in Figure 4), such that an output of one node is input to another, connected node. For example, node 227 is connected to nodes 223 and 224 via respective connections, whereby the outputs of the nodes 223 and 224 are input to node 227. Node 227 is also connected to node 224 via a recurrent connection (see arrow) that serves as a data "loop" enabling node 224 to consider both a current input and what has been learned by node 227 from a previous input. Node 225 is connected to node 223 in the same way.

Each of nodes 223-227 within the hidden layers 210 contain a learned parameter derived in a training phase of the neural network 200. The learned parameter is function, for example an activation function (sometimes referred to as a "transfer function"), that computes an output based on the inputs to the particular node by applying a mathematical operation to the inputs. Examples of activation functions include: Sigmoid, Tanh, and ReLU functions.

The connections between nodes are assigned weights that apply to the input of a node and the learned parameter of the node is applied to the weighted sum of its inputs. The assignment of weights to the connections is also learnt in the training phase of the neural network 200.

In other examples, the neural network 200 may comprise a different number and/or arrangement of nodes and/or hidden layers than those described in relation to Figure 4.

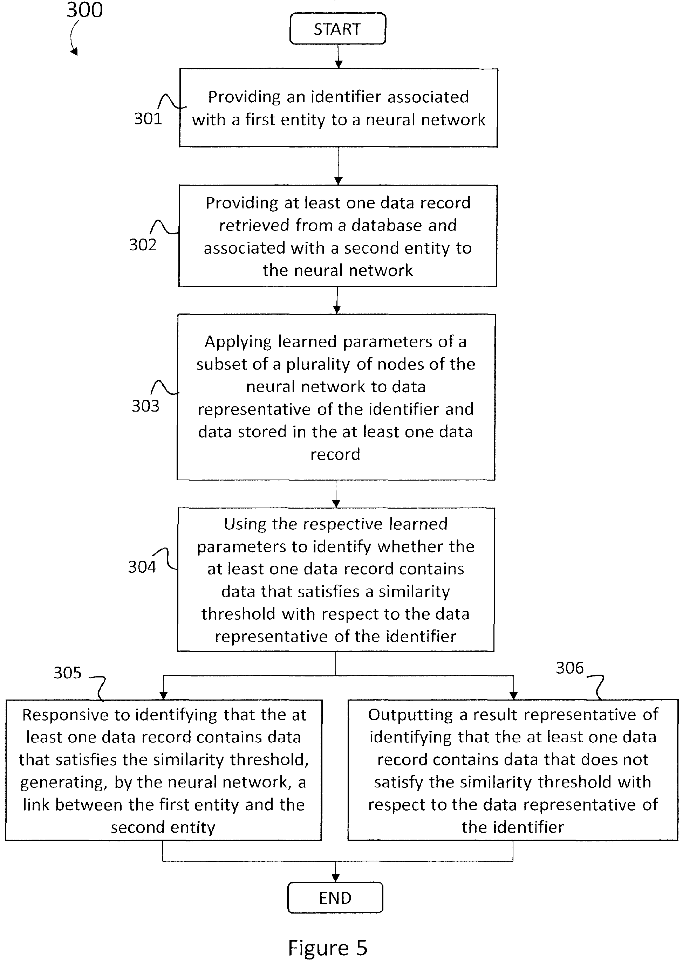

Figure 5 is a flowchart showing a method 300 implemented by the server system 110 of Figure 2 with respect to the neural network 200 of Figure 3, according to an example.

At block 301, an identifier associated with a first entity is provided to the neural network 200. At block 302, at least one data record, retrieved from the database 120 and associated with a second entity, is provided to the neural network 200.

The method 300 then proceeds to block 303 where the learned parameters of a subset of the plurality of nodes of the neural network 200 are applied to data representative of the identifier and the data stored in the at least one data record.

At block 304 the respective learned parameters are used to identify whether the at least one data record contains data that satisfies a similarity threshold with respect to the data representative of the identifier.

Responsive to identifying that the at least one data record contains data that satisfies the similarity threshold, at block 305 a link is generated between the first entity and the second entity. Otherwise, the method 300 proceeds to block 306 where a result is outputted representative of identifying that the at least one data record contains data that does not satisfy the similarity threshold with respect to the data representative of the identifier.

In one example, following blocks 305 and 306 an action is initiated with respect to the database. Following block 305, the action may be to update the at least one data record to include the identifier.

Following block 306, the action may be to generate a new data record in the database, the new record comprising the identifier. In such an example, the identifier may be obtained from a third-party source and translated into a new data record that is generated in the database. In cases where the method 300 is processing an identifier that is already stored in a data record in the database, for example, to tidy up old data by identifying and removing duplicates or records linked to a common entity, when it is found that the entity associated with the first data record is not linked to the entity associated with the second data record, the first data record is maintained in the database.

In an alternative example, a plurality of data records, each being associated with a respective entity, are retrieved from the database and provided to the neural network at block 302. In such a scenario, the steps of blocks 303 to 306 are performed with respect to the plurality of data records such that for each of the plurality of data blocks either a link is generated between the first entity and the respective entity of the corresponding data block or a result is outputted representative of identifying that the data within a data block does not satisfy the similarity threshold with respect to the data of the identifier. Accordingly, it is established per data record whether the associated entity is linked to the first entity and a collective result may be outputted that indicates the established links and/or lack thereof, which provides comprehensive entity linking results because an answer is established per data record.

In one example, some of the plurality of data records provided to the neural network are associated with the same entity and for a scenario in which the entity associated with these data records is determined to be linked to the first entity, the data contained within the data records may be combined into a single data record to reduce the storage requirements of the database.

### Training the Neural Network

The neural network 200 is trained using a number of sample data records stored in the database (or another data source), identifiers for entities and a plurality of vectors representing words, where an expected output (that is, whether a link is to be established or a result outputted) is known. This is also referred to as supervised learning of the neural network. In one example, the sample data records have been previously processed for the purpose of entity linking and stored in the database.

The training of the neural network 200 is understood to occur in a "training phase" (sometimes referred to as a "learning phase") that precedes inference of the neural network 200. In some cases, multiple training phases may take place before the neural network 200 is executed on unseen data. In some cases, the use and training phases may alternate with one another for a predetermined period of time or until a predetermined number of data training samples have been processed by the neural network.

As the neural network 200 is trained over time, one or more outputs resulting from the training are used to evaluate the performance of the neural network 200 and tune one or more parameters of respective nodes and/or associated weightings in the neural network 200 based on the evaluation.

### Implementation Example

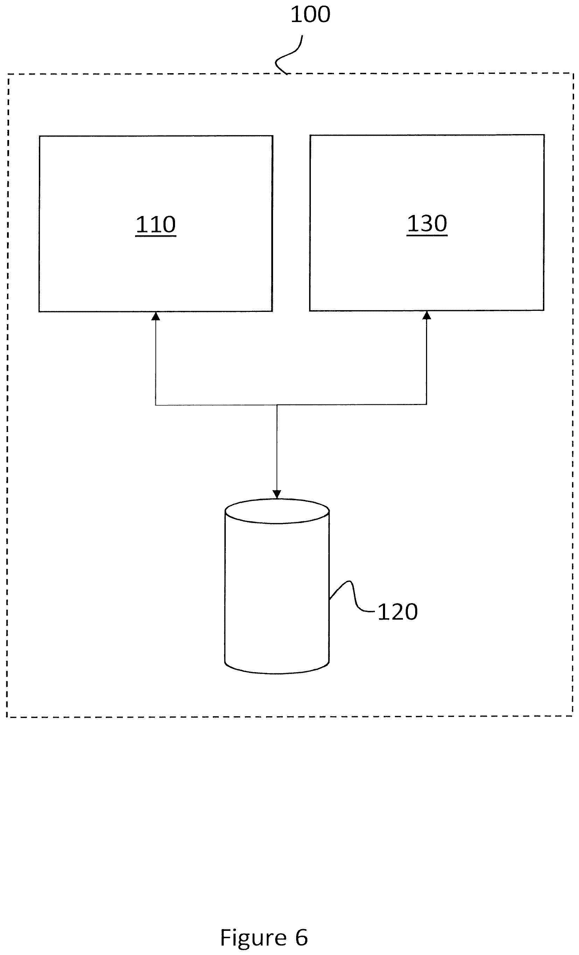

In one example, the computing system 100 comprises a search engine 130 communicatively coupled to the storage system 120, see Figure 6. The neural network 200 is used to identify and generate links between one or more search results generated by the search engine 130 and an identifier contained within an initial search query, the identifier being extracted from an electronic version of a document. In such a scenario, the search results contain at least one data record retrieved from a database, such as is part of the storage system 120, that the search engine 130 has determined, when executing the search query, to be related to the identifier of the search query. Accordingly, the search results are understood to consist of a list of "candidate" data records with respect to the search query. However, search engines typically return search results even when those results are not particularly relevant to the initial search query. The neural network 200 is used to refine the search results generated by the search engine 130 and thereby establish more robust links between an identifier of a search query and data records within a database of the storage system 120 and improve the quality of data stored in the database.

The identifier may have been extracted from the document using a computer vision neural network (NN) trained to detect visual patterns formed by data blocks in a document and subsequently identify and assign classes to the data blocks based on learned parameters.

In such an example, the computer vision NN outputs a pixelwise probability map for the document. The map indicates a per pixel probability that areas (data blocks) of the document correspond to a particular class: for an invoice document a data block is a field of the invoice and is classified as such (e.g. class = supplier name, invoice total amount). The classification involves identifying whether a pixel (which on a grayscale can be any value from 0 (representing white, or blank) to 1 (representing black)) is within an area (data block) that the computer vision NN has been trained to recognise as one that includes information, specifically, an area containing data relating to particular classes such as supplier name, reference number and invoice total amount.

Words within the data blocks are identified, for example using optical character recognition (OCR). This enables arrays of pixels to be associated with a particular word. The co-ordinates of the pixels and their probabilities are the basis for assigning a score to each word in the data blocks. The score represents the probability of that word being within a particular data block in the document, for example, a data block corresponding to a particular class.

Returning to the search engine example described above, the scores may be used to "boost" particular words forming an identifier within a search query submitted to the database of the storage system 120, so that the search engine 130 considers the number of matching words between the identifier and the textual data within a data record (row) of the database and the scores associated with those words. As an example, a word identified as relating to a supplier name may be assigned a higher score than a word identified as relating to a supplier address, such that a data record that contains data that matches the supplier name is identified as being more relevant to the search query than a data record that contains data that matches the supplier address and not the supplier name.

A first data record having a greater total score (a sum of scores associated with individual words in the data record that match the identifier) than another data record is given a greater weight by the search engine 130 so that supplier information relating to the first data record is ranked higher up in the search results compared to other lower scoring data records (i.e. entries in the database that are determined to match or be sufficiently similar to the search query). In one example, the search results provided by the search engine 130 are a list of candidate suppliers, ranked in order of total score.

### Use Case Examples

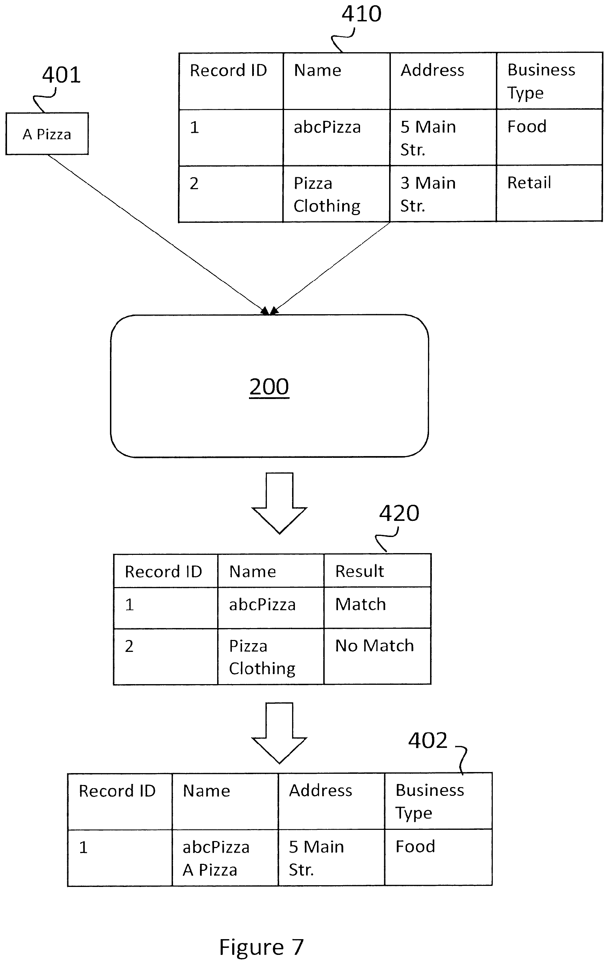

Figure 7 shows a schematic representative of inputs provided to and an output generated by the neural network 200, according to an example. In this example an identifier 401 is a name "A Pizza" extracted from a data block within an electronic version of an invoice document.

A plurality of data records 410 contains a first data record and a second data record each being associated with a respective entity and storing data within a plurality of fields relating to the following attributes: "Record ID"; "Name"; "Address" and "Business Type". The plurality of data records 410 are representative of a subsection of a database of the storage system 120, each having a plurality of fields that contain data representative of a respective attribute of an associated entity.

A first data record of the plurality of data records 410 contains the following data: Record ID: 1; Name: abcPizza; Address 5 Main Str.; Business Type: Food. A second data record of the plurality of data records 410 contains the following data: Record ID: 2; Name: Pizza Clothing; Address 3 Main Str.; Business Type: Retail.

The identifier 401 and the plurality of data records 410 are input to the neural network 200 for the purpose of entity linking. The method 300 (Figure 5) is performed by the neural network 200.

For the first data record (Record ID = 1), the neural network 200 identifies that the name "abcPizza" satisfies a similarity threshold with respect to the "A Pizza" identifier 401. Consequently, the neural network 200 establishes a link between the identifier 401 and the first data record based on their respective name data: "A Pizza" and "abcPizza". This is output in a set of results 420 by an indication of "Match" within the "Result" column of the set of results 420.

For the second data record (Record ID = 2), the neural network 200 identifies that the name "Pizza Clothing" does not satisfy a similarity threshold with respect to the "A Pizza" identifier 401. Consequently, the neural network 200 outputs a result indicative of the aforementioned identification of the lack of similarity. This is indicated in the "Result" column of the set of results as "No Match".

The first data record of the plurality of data records 410 is updated to include the data of the identifier 401 within the relevant data field, that is, the "Name" field.

In response to determining that the entity associated with the identifier "A Pizza" is linked to the entity of the first data record, the first data record can be edited so as to contain at least some of the data of the identifier 401, for example data that is different to that of the first data record but is determined to have the same meaning, like the Name data: "A Pizza" and "abcPizza" .

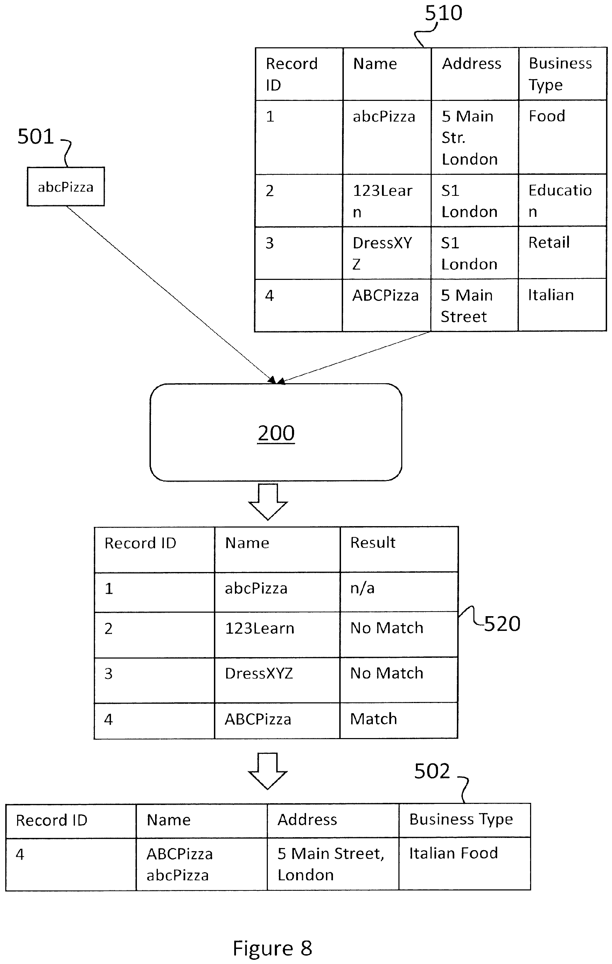

Figure 8 shows a schematic representative of inputs provided to and an output generated by the neural network 200, according to another example. An identifier 501 is a name "abcPizza" associated with a first entity. In this example, the identifier 501 has been extracted from a first record of a plurality of data records 510.

Each of the plurality of data records 510 is associated with a respective entity and contains data within a plurality of fields relating to the following attributes: "Record ID"; "Name"; "Address" and "Business Type". The first data record contains the following data: Record ID: 1; Name: abcPizza; Address: 5 Main Str., London; Business Type: Food. A second data record of the plurality of data records 510 contains the following data: Record ID: 2; Name: 123Learn; Address: S1 London; Business Type: Education. A third data record of the plurality of data records 510 contains the following data: Record ID: 3; Name: DressXYZ; Address: S1 London; Business Type: Retail. A fourth data record of the plurality of data records 510 contains the following data: Record ID: 4; Name: ABCPizza; Address: 5 Main Street; Business Type: Italian.

The identifier 501 and the plurality of data records 510 are input to the neural network 200 for the purpose of entity linking. As for the example of Figure 7, the method 300 (Figure 5) is performed by the neural network 200.

For the fourth data record (Record ID = 4), the neural network 200 identifies that the data therein, for example the Name "ABCPizza" satisfies a similarity threshold with respect to the "abcPizza" identifier 501. Consequently, the neural network 200 establishes a link between the identifier 501 and the fourth data record based on their respective name data: "abcPizza" and "ABCPizza". This is output in a set of results 520 by an indication of "Match" within the "Result" column for the fourth data record.

For the second and third data records, the neural network 200 identifies that the names "123Learn" and "DressXYZ" do not satisfy a similarity threshold with respect to the "abcPizza" identifier 501. Consequently, the neural network 200 outputs a result indicative of the aforementioned identification of the lack of similarity. This is indicated in the "Result" column of the set of results as "No Match" for the second and third records.

A "Match" determination may be used to identify duplicate records and optimize storage in the storage system 102. With the example of Figure 8, because the entity associated with identifier of the first data record (Record ID =1) and the entity associated with name of the fourth data record are determined to be linked, the first and fourth data records are duplicates within a database of the storage system 120. Indeed, given that a data record, that is, the fourth data record, already exists for the common entity in the database, in order to address duplication of records, the first data record may be deleted from the database and some or all of the data contained by the fields of the first data record, where it differs to data stored in the fourth data record, may be stored in, or appended to, the appropriate fields of the fourth data record. For example, the fourth data record can be updated to include the "abcPizza" name of the identifier 501 within the relevant data field, that is, the "Name" field. In addition, the "Address" field of the fourth data record is modified to include "London" and the "Business type" field is modified to include "Food".

Identifying that a single entity is defined by more than one record within a database of the storage system 120 provides an opportunity to: (i) streamline the data held by the storage system 120 by retaining a single record within the database for the entity in question and removing other records; and (ii) train the neural network 200 so that duplication does not happen again for the same data. The training of the model under (ii) can be carried out by updating a rule underlying the neural network and applying that updated rule to the one or more learned parameters to which it relates. In the example of Figure 8, a rule may be updated so that "abcPizza" has the same meaning as "ABCPizza" and "5 Main Str." has the same meaning as "5 Main Street". In this way, the neural network has learnt that "abcPizza" has the same meaning as "ABCPizza", so if in future the identifier "abcPizza" is submitted to the neural network 200, the neural network 200 will identify a link with the single record of the database that was updated to be contain "abcPizza" and "ABCPizza" as name data.

Whilst the examples of Figures 7 and 8 describe identifying links between entities based on name data, other attributes, for example, address data can be used (in isolation or in addition to other data) to determine sufficient similarity between entities.

In other examples, multiple data records, M, may be identified as containing data that is sufficiently similar to an identifier. In this case, the multiple data records M are combined into a number of data records that is fewer than M to achieve deduplication within the database. In particular, the highest rate of deduplication is achieved by a many-to-one transformation whereby data is extracted from M-1 of the multiple data records and inserted into the remaining single data record from which data was not extracted and then the M-1 data records are deleted. The data being extracted from the M-1 data records is new or different to data stored into the remaining single data record. Where the multiple records are deemed sufficiently similar to the identifier based on a number of different attributes, for example, "Name" and "Address", the neural network 200 may generate a result that initiates a check of the data within the data records, for example, a "Please Check" result that prompts a check by a user, to ensure that there is a link between the entity associated with the identifier and the respective entity of each data record and a link between the entities of the multiple data records.

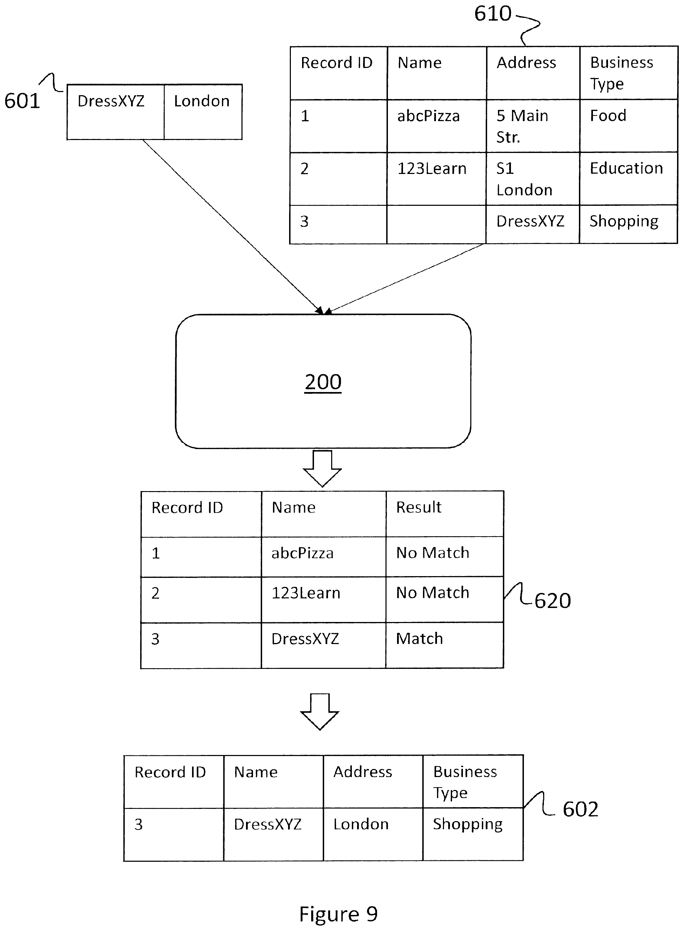

Figure 9 shows a schematic representative of inputs provided to and an output generated by the neural network 200, according to another example.

In this example an identifier 601 is a name "DressXYZ" and an address "London" both extracted from a data block within an electronic version of an invoice document.

A plurality of data records 610 contains data records each being associated with a respective entity and storing data within a plurality of fields relating to the following attributes: "Record ID"; "Name"; "Address" and "Business Type". The plurality of data records 610 are representative of a subsection of a database of the storage system 120, each having a plurality of fields that contain data representative of a respective attribute of an associated entity.

A first data record of the plurality of data records 610 contains the following data: Record ID: 1; Name: abcPizza; Address 5 Main Str.; Business Type: Food. A second data record of the plurality of data records 610 contains the following data: Record ID: 2; Name: 123Learn; Address: S1 London; Business Type: Education. A third data record of the plurality of data records 610 contains the following data: Record ID: 3; Address: DressXYZ; Business Type: Shopping. The third data record does not contain data in the "Name" field and the "DressXYZ" data is incorrectly assigned to the "Address" field.

The identifier 601 and the plurality of data records 610 are input to the neural network 200 for the purpose of entity linking. The method 300 (Figure 5) is performed by the neural network 200.

For the first data record (Record ID = 1), the neural network 200 identifies that the name "abcPizza" does not satisfy a similarity threshold with respect to the "DressXYZ" identifier 601. Consequently, the neural network 200 outputs a result indicative of the aforementioned identification of the lack of similarity. This is indicated in the "Result" column of the set of results as "No Match".

For the second data record (Record ID = 2), despite the identifier 601 containing address data "London" and the "Address" field of the second data record containing the data "S1 London", the name data "DressXYZ" of the identifier 601 is very different to the name data "123Learn" of the "Name" field of the second data record. In this example, name data is given a higher weighting than address data and, consequently, the neural network 200 identifies that the second data record does not satisfy a similarity threshold with respect to the "DressXYZ" identifier 601. The neural network 200 outputs a result indicative of the aforementioned identification of the lack of similarity. This is indicated in the "Result" column of the set of results as "No Match".

For the third data record (Record ID = 3), the neural network 200 identifies that the data "DressXYZ" in the Address field satisfies a similarity threshold with respect to the identifier 601. Consequently, the neural network 200 establishes a link between the identifier 601 and the third data record based on their respective data. This is output in a set of results 620 by an indication of "Match" within the "Result" column of the set of results 620. Alternatively, since the link is established based on data within a field of the data record that is different to the field of the identifier 601, that is, based on the "Address" field of the data record, the neural network 200 may output an indication that prompts action with respect to the results 620, such as a "Please Check" indication that prompts a user check, before initiating action with respect to the database.

The third data record of the plurality of data records 610 is subsequently updated to include the address data "London" of the identifier 601 within the relevant data field, that is, the "Address" field, and to include the name data "DressXYZ" in the "Name" field. Accordingly, the quality of the data contained within the third data record has been improved based on the data of the identifier 601, whilst avoiding the generation of a duplicate data record relating to the entity DressXYZ.

In the examples of Figures 7-9, the plurality of data records 410, 510, 610 input to the neural network are a subset of records from a database of the storage system 120. In other variations, the search engine described in relation to Figure 6 may be combined with the examples of Figures 7-9 such that the plurality of data records input to the neural network have been identified as so-called "candidate" records that are somewhat relevant to the identifiers 401, 501, 601. For instance, the plurality of data records 510 may only contain data records that include a variation of the "abcPizza" identifier 501, rather than the second and third data records (Record IDs = 2 and 3) that have name data as "123Learn" and "DressXYZ", respectively.

The neural network 200 may be used to identify links between entities associated with data that is obtained from different data sources (e.g. a database in a storage system and an input document or two data records of a database). For data records in a database, the data may be initially stored into the database as if the associated entities are distinct (that is, the data is stored in separate data records). The neural network 200 determines whether there is a link between the respective entities and consequently, whether the storage technique in the common data source is to be refined, for example, by combining two separate data records into a single data record, removing duplicate data, and maintaining distinct data for a comprehensive definition of the linked or common entity.

At least some aspects of the embodiments described herein with reference to Figures 1-9 comprise computer processes performed in processing systems or processors. However, in some examples, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

In the preceding description, for purposes of explanation, numerous specific details of certain examples are set forth. Reference in the specification to "an example" or similar language means that a particular feature, structure, or characteristic described in connection with the example is included in at least that one example, but not necessarily in other examples.

The above examples are to be understood as illustrative. It is to be understood that any feature described in relation to any one example may be used alone, or in combination with other features described, and may also be used in combination with one or more features of any other of the examples, or any combination of any other of the examples. Furthermore, equivalents and modifications not described above may also be employed.

## Claims

1. A computer-implemented method comprising:
providing, by a processor configured to execute a neural network, a identifier associated with a first entity to the neural network, wherein the neural network comprises a plurality of nodes each containing a learned parameter, each learned parameter being derived in a training phase of the neural network in which at least one vector representing a word is input to the neural network;
providing, by the processor and to the neural network, at least one data record retrieved from a database and associated with a second entity, the at least one data record comprising data stored therein;
applying, by the neural network, the learned parameters of at least a subset of the plurality of nodes to data representative of the identifier and the data stored in the at least one data record;
using, by the neural network, the respective learned parameters to identify whether the at least one data record contains data that satisfies a similarity threshold with respect to the data representative of the identifier;
responsive to identifying that the at least one data record contains data that satisfies the similarity threshold, generating, by the neural network, a link between the first entity and the second entity;
otherwise, outputting a result representative of identifying that the at least one data record contains data that does not satisfy the similarity threshold with respect to the data representative of the identifier.

2. The computer-implemented method of claim 1, wherein the learned parameters of the plurality of nodes are arranged to identify textual and semantic similarities between the data representative of the identifier and the data stored in the at least one data record.

3. The computer-implemented method of claim 1 or 2, further comprising a plurality of data records, each being associated with a respective entity, wherein the method further comprises:
using, by the neural network, the respective learned parameters to identify whether each of the plurality of data records contains data that satisfies a similarity threshold with respect to the data representative of the identifier.

4. The computer-implemented method of claim 3, further comprising:
for each of the plurality of data records that contains data that satisfies the similarity threshold, generating a link between the first entity and the respective entity of the corresponding data record.

5. The computer-implemented method of claim 4, further comprising:
outputting a result indicative of the one or more links between the first entity and the respective entities of the corresponding data records.

6. The computer-implemented method of claim 3 or 4, further comprising:
for each of the plurality of data records that does not contain data that satisfies the similarity threshold, outputting a result representative of identifying that the respective data record contains data that does not satisfy the similarity threshold with respect to the data representative of the identifier.

7. The computer implemented method of any preceding claim, wherein the identifier is associated with a document comprising data and responsive to a link being generated between the first entity and a respective entity associated with a data record, extracting the data from the document associated with the identifier and storing the data extracted from the document into the at least one data record associated with the respective entity.

8. The computer implemented method of any of claims 1 to 6, wherein the identifier is associated with another data record retrieved from the database and responsive to a link being generated between the first entity and a respective entity associated with a different data record, the method further comprising:
extracting the data from the another data record;
storing said data into the different data record associated with the respective entity; and
deleting the another data record from the database.

9. The computer implemented method of any of claims 1 to 6, wherein the identifier is associated with a document comprising data and responsive to identifying that the at least one data record contains data that does not satisfy a similarity threshold with respect to the data representative of the identifier, extracting the data from the document associated with the identifier and generating a further data record containing the data extracted from the document, the further data record being stored into the database.

10. The computer implemented method of any preceding claim, wherein the at least one data record is a result of a search query executed by a search engine with respect to the database.

11. A computer system comprising a server, the server having a processor configured to implement a method according to any of claims 1 to 10.

12. A computer-readable medium comprising instructions that, when executed by at least one processor, cause the at least one processor to carry out the method of any of claims 1 to 10.
